# EUROPEAN PATENT APPLICATION

(11) **EP 3 936 357 A1**
(43) Date of publication of application: **12.01.2022**
(21) Application number: 20185208.4
(22) Date of filing: 10.07.2020
(51) Int. Cl.: B60K 1/02, B60K 6/52, B60K 17/02, B60K 17/08, F16H 3/00

(54) **AN ELECTRIC DRIVE MODULE**

(71) Applicant: VOLVO TRUCK CORPORATION, 405 08 Göteborg (SE)
(72) Inventor: KARLSSON, Viktor, 431 66 Mölndal (SE); HENDRIKS, Jan, 426 66 Västra Frölunda (SE); HILTUNEN, Larry, 423 40 Torslanda (SE); ANDERSSON, Jörgen, 438 33 Landvetter (SE); BARILLOT, Thomas, 69440 Mornant (FR)
(74) Representative: Valea AB

(57) **Abstract**

An electric drive module (100) for use in an electrically operated vehicle, comprising:
- at least one electric machine assembly comprising an electric machine (101, 102) and an electric machine drive unit (103, 104),
- at least one reduction gear set (110, 111),
- a transmission (105) comprising at least one transmission input shaft (106, 107), a transmission output shaft (108), and a primary gear set (109) via which torque is transmittable between the at least one transmission input shaft and the transmission output shaft,
wherein each one of the at least one electric machine assembly is drivingly connectable to an associated one of the at least one transmission input shaft via an associated one of the at least one reduction gear set.

## Description

### TECHNICAL FIELD

The invention relates to an electric drive module and a vehicle comprising such a drive module.

The invention can be applied in electrically operated heavy-duty vehicles, such as trucks, buses and construction equipment. Although the invention will be described with respect to a truck, the invention is not restricted to this particular vehicle, but may also be used in other electrically operated vehicles such as buses, trailers, wheel loaders, excavators, passenger cars, etc. The invention is applicable in fully electrified vehicles, powered by one of more electric machines, and also in hybrid vehicles, powered by a combination of electric machine(s) and one or more internal combustion engines.

### BACKGROUND

A powertrain of an electrically operated vehicle may have many different configurations. For smaller vehicles, it is common that the powertrain comprises a single electric machine. Since the relative speed range of an electric machine is generally larger than that of an internal combustion engine, it is usually possible to reduce the number of available gear ratios in comparison with transmissions used for torque conversion in powertrains with internal combustion engines. However, for heavy vehicles, it may be desirable to provide two or more electric machines for propulsion of the vehicle, enabling the usage of smaller electric machines. In such powertrains, a common transmission may be provided, transmitting torque from each one of the electric machines to a common output shaft used to propel a driving axle of the vehicle.

Various powertrain configurations of electrically operated vehicles include configurations in which the electric machine or machines is/are mounted on a driving axle of the vehicle. Examples of such configurations include rigid axle configurations, in which opposite driving wheels are rigidly connected, and independent rear suspension (IRS) and independent front suspension (IFS) configurations, in which each individual driving wheel on the same driving axle is allowed to move vertically. In other configurations, the electric machine or machines is/are frame-mounted, similarly to how an internal combustion engine of a "traditional" powertrain is usually mounted.

With two electric machines, both machines may be used when high power is needed, such as for starting the vehicle, while as one of the machines may be used on its own for standard operation, such as driving at steady speed. In combination with at least two gears, acceptable characteristics are achieved in terms of driveability, startability and gradeability.

An electric machine is typically most efficient at a relatively high rotational speed that needs to be reduced to the desired wheel speed for driving the vehicle, requiring high reduction ratios. In order to maximize efficiency, a single reduction step is desirable, since this leads to minimal frictional losses. Gear selection may in this case need to be performed on the outgoing shafts from the electric machines, rotating at high speed. This may result in difficulties with synchronisation of the gears during gear changes. Furthermore, the high reduction ratios needed result in space consuming arrangements, in which a combination of electric machines and transmission is difficult to fit in the vehicle, in particular in view of space consuming on-board electric energy storage systems.

### SUMMARY

A primary object of the invention is to provide an electric drive module for a vehicle, which in at least some aspect alleviates the above mentioned problems. Another object is to provide such an electric drive module which is relatively compact and whose geometrical configuration may more easily be varied to meet geometrical constraints of a number of different powertrain configurations of the vehicle.

According to a first aspect of the invention, at least the primary object is achieved by an electric drive module for use in an electrically operated vehicle according to claim 1. The electric drive module comprises:
- at least one electric machine assembly comprising an electric machine and an electric machine drive unit,
- at least one reduction gear set,
- a transmission comprising at least one transmission input shaft, a transmission output shaft, and a primary gear set via which torque is transmittable between the at least one transmission input shaft and the transmission output shaft,
wherein each one of the at least one electric machine assembly is drivingly connectable to an associated one of the at least one transmission input shaft via an associated one of the at least one reduction gear set.

In the electric drive module according to the invention, the reduction of rotational speed from each one of the electric machines is performed in at least two steps: in a first step by means of the associated reduction gear set, and in a second step between the associated transmission input shaft and the transmission output shaft. Reducing the rotational speed in two steps causes on one hand a slightly reduced efficiency in comparison with one-step reduction, but leads on the other hand to a more versatile configuration of the electric drive module. In particular, the distance between an output shaft of the at least one electric machine and the output shaft of the transmission is not locked to a value set by the gear reduction ratio, but may be varied by varying the placement of the reduction gear set and the electric machine with respect to the transmission, i.e. by varying angular positions of the at least one transmission input shaft and the output shaft of the at least one electric machine with respect to the transmission output shaft.

By providing a reduction gear set instead of using an output shaft of the electric machine as an input shaft of the transmission, a countershaft is applied to the transmission. The electric drive module thereby becomes possible to apply in rigid axle configurations, independent rear and/or front suspension (IRS, IFS) configurations and frame mounted configurations, since the two-step reduction enables a greater degree of freedom in how the electric machine(s) may be positioned in relation to the transmission output shaft. In particular, the reduction gear set allows setting an angle between the electric machine output shaft and the transmission input shaft independently of an angle set between the transmission input shaft and transmission output shaft. This makes it possible to tailor the electric drive module for its application, adapting to the packaging needs of the vehicle. For example, the height and width of the electric drive module can be altered by proper angle selection. Thus, the same ingoing components in the form of electric machine assemblies, transmission, reduction gears and shafts may be used in electric drive modules adapted for various powertrain configurations such as rigid axle configurations, independent suspension configurations and frame mounted configurations.

Each one of the at least one reduction gear set may comprise an input gear wheel, and a relatively larger output gear wheel, the output gear wheel being provided on the associated transmission input shaft and the input gear wheel being provided on an output shaft of the associated electric machine. Each reduction gear set can have its own gear ratio, defined by the size of the ingoing gears. This allows the usage/selection of the electric machines as an extra gear selection, as a complement to the transmission.

At least one clutch, such as at least one dog clutch, may be provided for selectively disconnecting at least one of the electric machine assembly/assemblies from the at least one reduction gear set, such that the disconnected electric machine assembly is not used for propulsion of the vehicle. Furthermore, the output shaft of the electric machine does not necessarily need to be a shaft which is directly connected to the electric machine. The output shaft carrying the input gear wheel of the reduction gear set may in some configurations be a shaft which is connected to the electric machine via one or more other shafts and additional gear set(s), e.g. a bevel gear set. Any such additional gear sets are preferably arranged to be in constant meshing engagement due to the normally high rotational speeds of the electric machine.

The at least one electric machine may be in the form of at least one electric motor/generator.

The electric machine drive (EMD) unit, is herein to be understood as an electronic device that harnesses and controls the flow of electric energy between an electric energy storage system of the vehicle and the electric machine. For example, when the electric machine is operated as a motor, the electric machine drive unit is configured to feed electricity into the electric machine in varying amounts and at varying frequencies, thereby indirectly controlling the speed and torque of the electric machine.

Optionally, the electric drive module comprises at least two electric machine assemblies, at least two transmission input shafts, and at least two reduction gear sets, each one of said at least two reduction gear sets being associated with one of said at least two electric machine assemblies. The electric drive module is thereby suitable for use in heavy duty vehicles, such as trucks and other heavy duty vehicles with gross combination weights of 26,000 kg or more. The electric drive module may in some cases comprise more than two electric machine assemblies, such as three electric machine assemblies. However, for very high gross combination weights of the vehicle, more than one driving axle may be used. For these applications, multiple electric drive modules can be used, one on each driving axle, instead of using more than two electric machine assemblies per axle.

Optionally, the primary gear set is configured for torque transmission between each one of the at least one transmission input shaft and the transmission output shaft at least at two selectable fixed gear ratios. The transmission herein further comprises means for selecting one of the fixed gear ratios, such as by shift forks and/or actuators. A transmission control unit may be provided for controlling the gear selection. Preferably, a neutral gear is also selectable, in which neutral gear no power may be transferred between the associated electric machine and the transmission output shaft. The means for selecting one of the fixed gear ratios is/are preferably configured for acting on input gear wheels of the primary gear set, which are mounted on the transmission input shaft(s). An advantage of having shift forks acting on these gear wheels, is that the rotational speed of these gear wheels is relatively low, as compared to the rotational speed of the electric machine, and that the torque is relative low, as compared to the transmission output shaft 108.

Optionally, the transmission further comprises an auxiliary gear set drivingly connected to the transmission output shaft. The auxiliary gear set increases the available gear ratio span and may have the function of a range gear.

Optionally, the auxiliary gear set comprises a planetary gear set. In this case, the transmission output shaft may preferably be connected to a sun gear or to a ring gear of the planetary gear set. The planetary gear set forms a space efficient range gear.

Optionally, each one of the at least one reduction gear set is a fixed ratio gear set configured for torque transmission between an electric machine output shaft of the associated electric machine assembly and the associated transmission input shaft at a single gear ratio. Each one of the electric machine output shafts may herein carry an input gear wheel, fixed for common rotation with the electric machine output shaft, and the associated transmission input shaft may carry a relatively larger output gear wheel, which is fixed for common rotation with the transmission input shaft and which is in meshing engagement with the input gear wheel.

Optionally, the single gear ratio of one of the at least one reduction gear set is different from the single gear ratio of another one of the at least one reduction gear set. Each reduction gear set may thus have its own reduction ratio.

As noted above, one or more clutches may also be provided for selectively disconnecting the electric machine(s), each clutch being provided between one of the electric machine(s) and the associated reduction gear set. Alternatively, the clutch may be provided after the reduction gear set, although this is a more space demanding configuration. By providing a fixed ratio gear set with a single gear ratio, difficulties with synchronizing gears at the high rotational speed of the electric machine output shaft are avoided. Gear changes may instead be carried out after reduction of the rotational speed by means of the fixed ratio gear set. Each one of the transmission input shafts may, in addition to the output gear wheel of the reduction gear, carry at least two selectively engageable input shaft gear wheels of the primary gear set. The transmission output shaft may carry at least two output gear wheels, each one of the output gear wheels being in meshing engagement with one of the input shaft gear wheels of each one of the associated transmission input shafts. The gear selection may preferably include a neutral position, to be able to disengage one of the electric machines when running at high vehicle speed, so that the engaged electric machine may run more efficiently. Also, both machined can be disconnected if vehicle needs to be towed away.

Optionally, an electric machine output shaft of the at least one electric machine assembly extends in parallel with the transmission output shaft. The transmission output shaft may in turn either extend in parallel with a longitudinal axis of the vehicle, corresponding to a so-called longitudinally mounted transmission, or perpendicularly to the longitudinal axis of the vehicle, corresponding to a so-called transversally mounted transmission.

Optionally, an electric machine output shaft of the at least one electric machine extends at an angle with respect to the transmission output shaft.

Optionally, an electric machine output shaft of the at least one electric machine extends perpendicularly to the transmission output shaft. The transmission may in turn be either longitudinally or transversally mounted as described above.

Optionally, at least the at least one electric machine assembly, the transmission and the at least one reduction gear set are assembled so as to form the electric drive module, the electric drive module further comprising a mounting interface for mounting the electric drive module to at least one of a frame of a vehicle, an axle of a vehicle, and a suspension of a vehicle.

Optionally, the electric drive module further comprises a single oil sump unit. This is convenient if two vertically stacked electric machines are provided. The oil sump unit may also include an oil pump.

Optionally, the electric drive module further comprises an output module drivingly connected to the transmission output shaft on an output side of the electric drive module. In this case, the electric drive module may further comprise a final reduction gear set, wherein the output module is drivingly connected to the transmission output shaft by means of the final reduction gear set. The output module may be configured for transferring torque to a propulsion axle, and/or to drive wheels of the vehicle.

Optionally, the output module comprises a differential gear set. The differential gear set, preferably in combination with the final reduction gear, renders the electric drive module suitable for use in for example an independent rear suspension (IRS) configuration, wherein opposite drive wheels may be driven at different relative rotational speeds.

Optionally, the output module comprises a centre gear. The centre gear, preferably in combination with the final reduction gear, renders the electric drive module suitable for use in a rigid axle configuration.

Optionally, the output module comprises a companion flange. The companion flange renders the electric drive module suitable for being frame mounted and used for driving a driving axle of the vehicle, such as a rear driving axle, via the companion flange and a propeller shaft connected thereto.

According to a second aspect of the invention, at least the primary object is also achieved by a vehicle comprising an electric drive module according to the first aspect. Advantages and advantageous features of the vehicle appear from the above description of the other aspects of the invention.

The vehicle may optionally be a fully electrified vehicle, or a hybrid vehicle comprising at least one combustion engine in addition to one or more electric machines. In a hybrid vehicle, a combustion engine may be configured for driving a first driving axle, and the electric drive module configured to drive a second driving axle.
Alternatively, that both the combustion engine and the electric drive module may engage on a common centre gear on the same driving axle.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a side view of a vehicle in which an electric drive module according to the invention may be applied,
Fig. 2 is a perspective view of an electric drive module according to a first embodiment,
Fig. 3 is an exploded view of parts of the electric drive module in fig. 2,
Fig. 4a is a front view of parts of the electric drive module in fig. 2,
Fig. 4b is a detail view from fig. 4a showing the area marked by dashes,
Fig. 5 is a side view of parts of the electric drive module in fig. 2,
Fig. 6 is a schematic view of an electric drive module according to a second embodiment,
Fig. 7 is a schematic view of an electric drive module according to a third embodiment, and
Fig. 8 is a schematic view of an electric drive module according to a fourth embodiment.

The drawings show diagrammatic exemplifying embodiments of the present invention and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

### DETAILED DESCRIPTION OF EXAMPLE EMBODIMENTS OF THE INVENTION

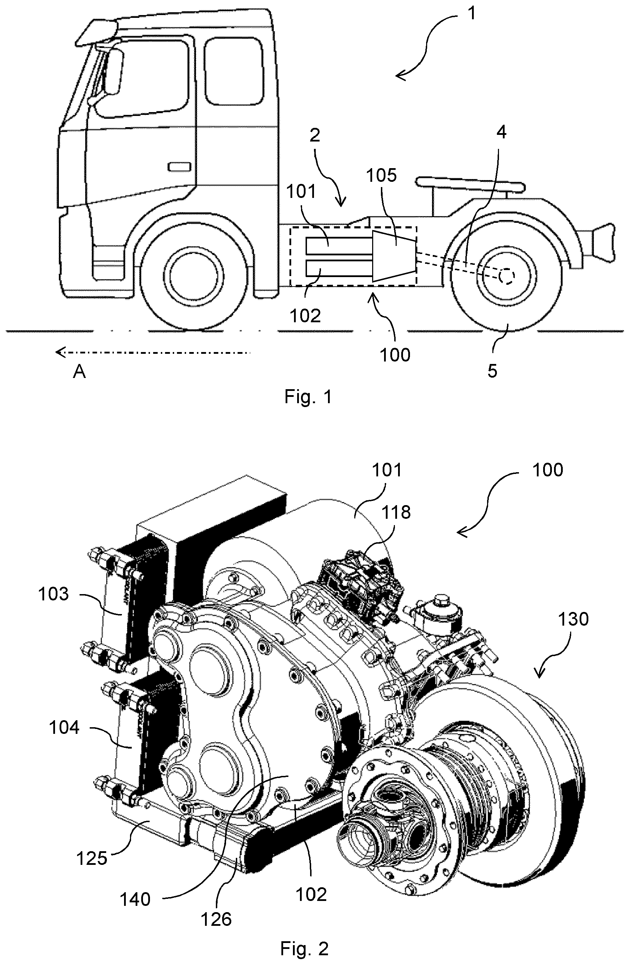

A vehicle 1 in the form of a truck according to an embodiment of the invention is schematically shown in fig. 1. The vehicle 1 includes a powertrain 2 with a frame mounted electric drive module 100 for propulsion of the vehicle 1. The electric drive module 100, which will be described in greater detail below, comprises two electric machines 101, 102 connected to a transmission 105. The transmission 105 is arranged to transfer torque from the electric drive module 100 to a drive shaft 3 connecting the transmission 105 to a driving axle 4 that drives ground engaging members, herein in the form of driving wheels 5, of the vehicle 1. Thus, in the shown embodiment, the vehicle 1 is a fully electrified vehicle configured to be driven solely by the electric drive module 100. The vehicle 1 may be arranged with more than one driving axle, such as two or more driving axles. In this case, each driving axle may be equipped with its own electric drive module. The electric drive module of the vehicle 1 may comprise a single electric machine, two electric machines, or more than two electric machines, such as three or four electric machines. The vehicle may also be a hybrid vehicle, provided with a combustion engine in addition to the electric drive module 100. The electric machines may be in the form of electric motors/generators.

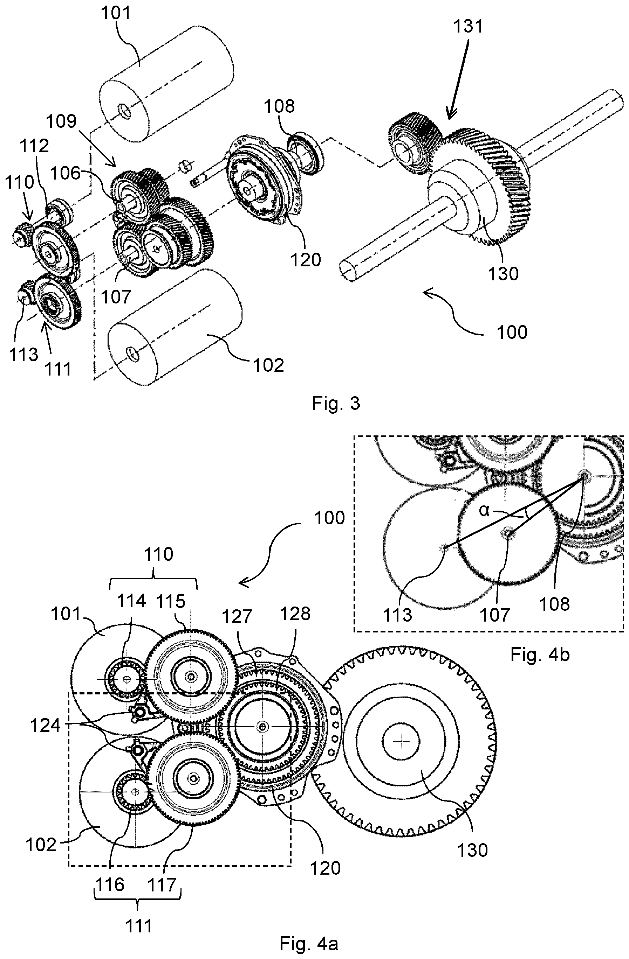

An electric drive module 100 according to a first embodiment, for use in an electrically operated vehicle, such as in the vehicle 1 shown in fig. 1, is shown in fig. 2. The electric drive module 100 comprises a first electric machine 101 and a first electric machine drive unit 103 configured to feed electric energy between the electric machine 101 and an electric energy storage system (not shown) of the vehicle 1. The first electric machine 101 and the first electric machine drive unit 103 forms a first electric machine assembly. The electric drive module 100 further comprises a second electric machine 102 and a second electric machine drive unit 104, forming a second electric machine assembly. A common transmission 105, as shown in fig. 3, is provided within a transmission housing 140. A transmission control unit 118 is provided for controlling gear shifting. A common oil sump unit 125 is arranged below the electric machines 101, 102. An oil pump 126 is provided for pumping oil to an oil cooler, which is herein integrated with the electric machine drive units 103, 104.

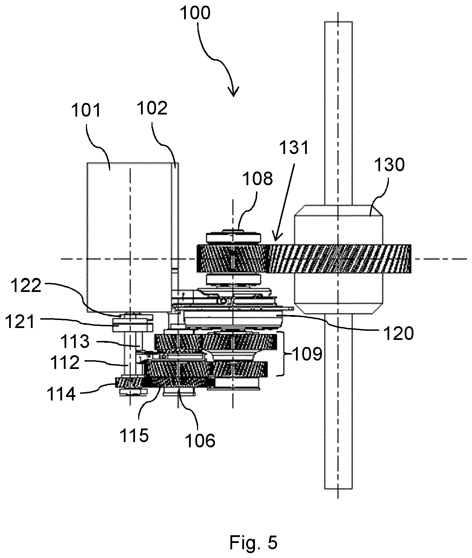

Figs. 3-5 show parts of the electric drive module 100 shown in fig. 2 in greater detail. The first electric machine 101 is drivingly connected to the transmission 105 via a first reduction gear set 110. The first reduction gear set 110 includes a first pinion 114, rotationally fixed on a first electric machine output shaft 112, in meshing engagement with a first reduction gear wheel 115, rotationally fixed on a first transmission input shaft 106. Similarly, the second electric machine 102 is drivingly connected to the transmission 105 via a second reduction gear set 111. The second reduction gear set 111 includes a second pinion 116, rotationally fixed on a second electric machine output shaft 113, in meshing engagement with a second reduction gear wheel 117, rotationally fixed on a second transmission input shaft 107. The first and second reduction gear sets 110, 111 are thus fixed reduction gears configured for torque transmission at a single fixed gear ratio. Dog clutches 121, 122 are provided for selectively disconnecting each one of the electric machine input shafts 112, 113 from the associated electric machine 101, 102.

The transmission 105 is configured for torque transmission between each one of the transmission input shafts 106, 107 and a common transmission output shaft 108 via a primary gear set 109. The primary gear set 109 includes herein a first set of selectively engageable input shaft gear wheels, mounted on the first transmission input shaft 106, and a second set of selectively engageable input shaft gear wheels mounted on the second transmission input shaft 107. It further includes a common set of output gear wheels 127, 128 mounted on an intermediate output shaft (not shown), which is in turn drivingly connected to the transmission output shaft 108 via an auxiliary gear set 120. The transmission control unit 118 as shown in fig. 2 is configured to control shift forks 124 via actuators (not shown) for selecting a first gear ratio or a second gear ratio for torque transfer from the respective electric machine 101, 102 to the transmission output shaft 108, or a neutral gear without any torque transmission. In the shown embodiment, the auxiliary gear set 120 is in the form of a planetary gear set providing a range gear.

The selectively engageable input shaft gear wheels of the primary gear set 109, provided on each transmission input shaft 106, 107, can be activated in at least three ways:
1) A neutral position, in which the input shaft gear wheels are not rotationally locked to the input shaft 106, 107 on which they are mounted. In this case, the associated electric machine 101, 102 is disconnected from the transmission 105.
2) A first one of the input shaft gear wheels is rotationally locked to the input shaft 106, 107 on which it is mounted and engaged with a first one of the output gear wheels 127, 128.
3) A second one of the input shaft gear wheels is rotationally locked to the input shaft 106, 107 on which it is mounted and engaged with a second one of the output gearwheels 127, 128.

Gear selection for torque transmission between each transmission input shaft 106, 107 and the transmission output shaft 108 may be carried out independently, i.e. a separate means for selecting one of the fixed gear ratios of the primary gear set 109 is provided for each transmission input shaft 106, 107. When more than one electric machines 101, 102, and consequently more than one input shafts 106, 107, are provided, combinations of gear selections on the different transmission input shafts 106, 107 provide a multi-gear selection transmission. The number of selectable gears may of course furthermore be varied by varying the number on input shaft and output gear wheels, and is not limited to two gear wheels per shaft.

An example of possible gear combinations for the shown embodiment with two transmission input shafts 106, 107 and two transmission input shaft gear wheels per transmission input shaft 106, 107, two transmission output gear wheels, and neutral, are as follows:

| | | | | | | | | | |
|---|---|---|---|---|---|---|---|---|---|
| First transmission input shaft 106: | N | L | H | N | L | H | N | L | H |
| Second transmission input shaft 107: | N | N | N | L | L | L | H | H | H |

Three gear positions N, L, H will give 3x3=9 gear combinations, wherein N represents "neutral gear", L represents "low gear", and H represents "high gear".

In the first embodiment shown in figs. 2-4, the electric drive module 100 is adapted for being transversely mounted and used with an independent rear suspension (IRS) of the vehicle. For this purpose, it further comprises an output module 130 for driving connection to drive wheels of the vehicle. The output module 130, drivingly connected to the auxiliary gear set 120, is drivingly connected to the transmission output shaft 108 via a final reduction gear set 131, for further increasing the torque originating from the electric machines 101, 102. The output module 130 comprises a centre gear and a differential gear (not shown), allowing opposite drive wheels of the vehicle to be driven at different relative rotational speeds. In alternative embodiments, the centre gear may be exchanged for a companion flange with an accompanying propeller shaft connected thereto.

Reference is now made to fig. 4b, showing a detail view from fig. 4a. As shown herein, the transmission input shaft 107 and the electric machine output shaft 113 are separated by an angle α with respect to a centre axis as defined by the transmission output shaft 108. The angle α may be varied depending on the intended use of the electric drive module 100. An advantage with the electric drive module 100 as disclosed herein is thereby its versatility. Thanks to the configuration with the electric machine output shafts 112, 113, the transmission input shafts 106, 107 and the intermediate output shaft carrying the transmission output gear wheels 127, 128, a greater degree of freedom is obtained in positioning of the electric machines 101, 102 with respect to the transmission output shaft 108 by varying the angle α. Hereby, the electric machine output shafts 112, 113 and the transmission input shafts 106, 107 may be independently positioned around the centre axis, as long as the various gear wheels are engageable. Dimensions of the electric drive unit 100 may thereby be altered without altering the available gear ratios. The electric drive module may thereby be adapted for mounting in various different powertrain configurations.

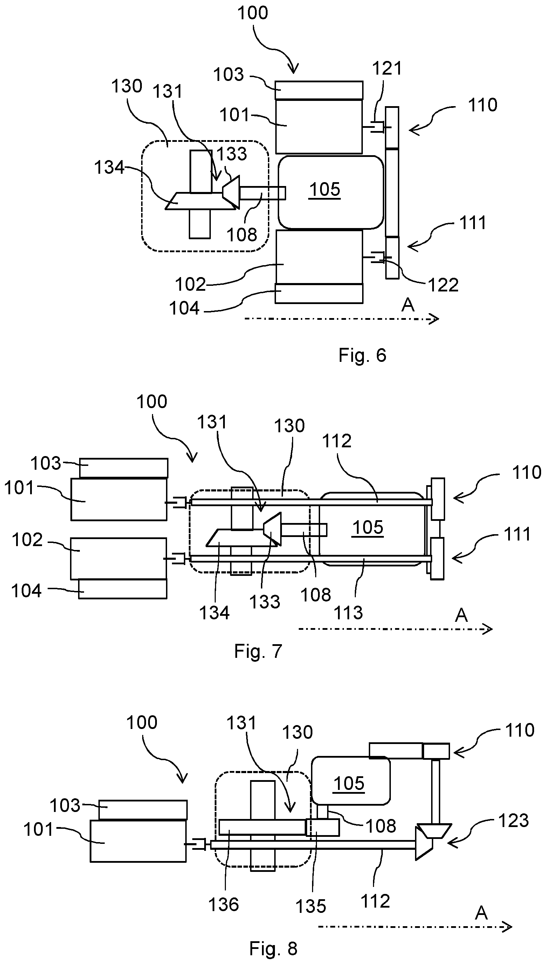

Various powertrain configurations in which the electric drive module 100 may be used are schematically shown in figs. 6-8.

Fig. 6 shows a relatively compact longitudinal transmission configuration in which the electric drive module 100 is intended for longitudinal mounting, i.e. with the transmission output shaft 108 extending in parallel with a longitudinal axis A of the vehicle, corresponding to an intended direction of travel. The electric drive module 100 is intended to be used with an independent rear suspension of the vehicle. For this purpose, an output module 130 is drivingly connected to the transmission 105 via the transmission output shaft 108 and a final reduction gear set 131, including a bevel pinion 133 and a crown gear 134. The electric machines 101, 102 and the corresponding electric machine drive units 103, 104 are in this configuration mounted on either side of the transmission 105, with the relatively short electric machine output shafts connected via dog clutches 121, 122 and extending in parallel with the longitudinal axis A. As explained above in connection with figs. 2-5, torque is transmitted from the electric machines 101, 102 to the transmission 105 via the reduction gear sets 110, 111 and the transmission 105 may comprise a plurality of selectable gears. The transmission may further comprise an auxiliary gear set, such as a planetary gear.

Fig. 7 shows another longitudinal transmission configuration in which the electric drive module 100 is intended for longitudinal mounting. The electric machines 101, 102 and the corresponding electric machine drive units 103, 104 are in this configuration mounted side-by-side on one side of the transmission 105, with the relatively long electric machine output shafts 112, 113 extending in parallel with the longitudinal axis A past the output module 130 and the transmission 105. The reduction gear sets 110, 111 are provided on an opposite side of the transmission 105 with respect to the electric machine assemblies. The electric drive module 100 is in this configuration intended for use in a rigid axle configuration of the vehicle. Similarly to the configuration shown in fig. 6, the final reduction gear set 131 includes a bevel pinion 133 and a crown gear 134.

Fig. 8 shows a transversal transmission configuration in which the electric drive module 100 is intended for transversal mounting. The electric drive module 100 is herein shown with a single electric machine 110 and a single electric machine drive unit 103. The electric machine output shaft 112 extends via a bevel gear set 123 to the reduction gear set 110. The transmission 105 is mounted with the transmission output shaft 108 extending perpendicularly to longitudinal axis A of the vehicle. It is drivingly connected to the output module 130 via the final reduction gear set 131, herein including a pinion 135 and a crown wheel 136.

It is to be understood that the present invention is not limited to the embodiments described above and illustrated in the drawings; rather, the skilled person will recognize that many changes and modifications may be made within the scope of the appended claims. For example, although the present invention has mainly been described in relation to an electric truck, the invention should be understood to be equally applicable for any type of electric vehicle, in particular an electric bus, electric construction equipment, or the like.

## Claims

1. An electric drive module (100) for use in an electrically operated vehicle (1), comprising:
- at least one electric machine assembly comprising an electric machine (101, 102) and an electric machine drive unit (103, 104),
- at least one reduction gear set (110, 111),
- a transmission (105) comprising at least one transmission input shaft (106, 107), a transmission output shaft (108), and a primary gear set (109) via which torque is transmittable between the at least one transmission input shaft (106, 107) and the transmission output shaft (108),
wherein each one of the at least one electric machine assembly is drivingly connectable to an associated one of the at least one transmission input shaft (106, 107) via an associated one of the at least one reduction gear set (110, 111).

2. The electric drive module according to claim 1, comprising at least two electric machine assemblies, at least two transmission input shafts (106, 107), and at least two reduction gear sets (110, 111), each one of said at least two reduction gear sets (110, 111) being associated with one of said at least two electric machine assemblies.

3. The electric drive module according to claim 1 or 2, wherein the primary gear set is configured for torque transmission between each one of the at least one transmission input shaft (106, 107) and the transmission output shaft (108) at least at two selectable fixed gear ratios.

4. The electric drive module according to any one of the preceding claims, wherein the transmission (105) further comprises an auxiliary gear set (120) drivingly connected to the transmission output shaft (108).

5. The electric drive module according to claim 4, wherein the auxiliary gear set (120) comprises a planetary gear set.

6. The electric drive module according to any one of the preceding claims, wherein each one of the at least one reduction gear set (110, 111) is a fixed ratio gear set configured for torque transmission between an electric machine output shaft (112, 113) of the associated electric machine assembly and the associated transmission input shaft (106, 107) at a single gear ratio.

7. The electric drive module according to any one of the preceding claims, wherein an electric machine output shaft (112, 113) of the at least one electric machine assembly extends in parallel with the transmission output shaft (108).

8. The electric drive module according to any one of claims 1-6, wherein an electric machine output shaft (112, 113) of the at least one electric machine (101, 102) extends at an angle with respect to the transmission output shaft (108).

9. The electric drive module according to any one of claims 1-6, wherein an electric machine output shaft (112, 113) of the at least one electric machine (101, 102) extends perpendicularly to the transmission output shaft (108).

10. The electric drive module according to any one of the preceding claims, wherein at least the at least one electric machine assembly, the transmission (105) and the at least one reduction gear set (110, 111) are assembled so as to form the electric drive module (100), the electric drive module (100) further comprising a mounting interface for mounting the electric drive module (100) to at least one of a frame of a vehicle (1), an axle of a vehicle, and a suspension of a vehicle.

11. The electric drive module according to any one of the preceding claims, further comprising a single oil sump unit (125).

12. The electric drive module according to any one of the preceding claims, further comprising an output module (130) drivingly connected to the transmission output shaft (108) on an output side of the electric drive module (100).

13. The electric drive module according to claim 12, further comprising a final reduction gear set (131), wherein the output module (130) is drivingly connected to the transmission output shaft (108) by means of the final reduction gear set (131).

14. The electric drive module according to claim 12 or 13, wherein the output module (130) comprises a differential gear set or a centre gear or a companion flange.

15. A vehicle (1) comprising an electric drive module (100) according to any one of the preceding claims.
